# EUROPEAN PATENT APPLICATION

(11) **EP 1 407 871 A1**
(43) Date of publication of application: **14.04.2004**
(21) Application number: 03022596.5
(22) Date of filing: 06.10.2003
(51) Int. Cl.: B29C 45/52

(54) **Injection molding device with boron carbide coat**

(30) Priority: 08.10.2002 JP 2002294547
(71) Applicant: FUJI PHOTO FILM CO., LTD., Kanagawa 250-01 (JP)
(72) Inventor: Suzuki, Takashi, c/o Fuji Photo Film Co.,Ltd., Minami-Ashigara-shi Kanagawa (JP); Konno, Masaaki c/o Sumitomo Heavy Industries Ltd., Chiba-shi, Chiba-ken (JP)
(74) Representative: Banzer, Hans-Jörg, Dipl.-Ing.

(57) **Abstract**

An injection device has a heating cylinder (11) , and a screw (12 ) which rotates freely and advances and withdraws freely within the heating cylinder (11). The screw (12) has a main body (13); a head (14) which is mounted to a front of the main body (13) and which has a distal end portion (17) and a small diameter portion (18); and a ring (23) which prevents a molding material from flowing reversely. Boron carbide is covered on a surface of at least one of the reverse flow preventing ring (23), the heating cylinder (11) and the screw head (14), in order to suppress wear.

## Description

### BACKGROUND OF THE INVENTION

### Technical Field

The present invention relates to an injection device.

### Description of the Related Art

In a conventional inj ection molding machine, a molded product is obtained by injecting a resin, which is a molding material and which has been heated and melted, into a heating cylinder under high pressure so as to fill the cavity of a mold device, and cooling and hardening the resin within the cavity.

The injection molding machine has the mold device, a mold clamping device, and an inj ection device. The mold clamping device has a fixed platen and a movable platen. Due to the movable platen being made to advance and withdraw by a cylinder for mold clamping, the mold device is closed, fastened, and opened.

The injection device has the heating cylinder which heats and melts the resin, and an injection nozzle which injects the molten resin. A screw is disposed within the heating cylinder so as to rotate freely and so as to advance and withdraw freely. During a metering process, when the screw is rotated by the driving of a motor for metering, molten resin is stored in front of a screw head at the front end of the screw. Accompanying this, the screw is withdrawn rearward. In an injecting process, when the screw is advanced forward by the driving of a motor for injection, the resin stored in front of the screw head is injected from the injection nozzle, and is filled into the cavity within the mold device.

At the time when the resin is injected, a portion of the resin stored in front of the screw head attempts to reversely flow rearward via the groove of the screw and the space between the outer peripheral surface of the screw and the inner peripheral surface of the heating cylinder. Thus, a reverse flow preventing device is provided so as to prevent the portion of the resin stored in front of the screw head from reversely flowing rearward. To this end, a reverse flow preventing ring is provided between the screw main body and the screw head. As the reverse flow preventing ring, there are a co-rotating type reverse flow preventing ring which is rotated integrally with the screw head, and a non-co-rotating type reverse flow preventing ring which rotates freely with respect to the screw head, both of which are disclosed in Japanese Patent Application Laid-Open (JP-A) No. 2001-88179.

In the conventional injection device, when the co-rotating type reverse flow preventing ring is used, accompanying rotation of the screw, the reverse flow preventing ring is rotated. As a result, the reverse flow preventing ring, while rotating, contacts the heating cylinder. It is easy for wear to arise at the outer peripheral surface of the reverse flow preventing ring and the inner peripheral surface of the heating cylinder. The durabilities of the reverse flow preventing ring and the heating cylinder are thereby deteriorated.

In particular, when molding is carried out by using a resin which contains silicone (e. g. , whose silicone content is 0. 5 to 3% by mass), the greater the silicone content, the faster the progression of wear. When the silicone precipitates from the resin, the lubricating layer formed by the resin becomes thin, and the progression of wear is accelerated even more. Thus, it has been thought to slow the progression of wear by making large the gap between the outer peripheral surface of the reverse flow preventing ring and the inner peripheral surface of the heating cylinder which is generally 50 µm or less (i.e., by making the difference between the radius of the reverse flow preventing ring and the radius of the heating cylinder large). However, when this gap is made to be large, in the injecting process, the amount of resin which reversely flows rearward at the time when the screw is advanced forward increases. As a result, the amount of resin which is filled into the cavity becomes unstable, and the quality of the molded product deteriorates.

Further, when the non-co-rotating type reverse flow preventing ring is used, the reverse flow preventing ring is completely independent of the screw, and the ring does not rotate even if the screw is rotated. Thus, the occurrence of wear at the outer peripheral surface of the reverse flow preventing ring can be prevented. However, in the metering process, when the screw is rotated, accompanying this rotation, the screw is withdrawn rearward. Thus, the screw head and the reverse flow preventing ring slide against each other, and wear arises at the rear end surface of the screw head and the front end surface of the reverse flow preventing ring. Accordingly, the durabilities of the reverse flow preventing device and the heating cylinder deteriorate. Here, the rear end surface of the screw head is the surface at the distal end portion of the screw head, which surface opposes the front end surface of the reverse flow preventing ring. The front end surface of the reverse flow preventing ring is the screw head side end surface of the ring.

The above-described problems cannot be avoided in this case as well. Namely, when molding is carried out by using a resin which contains silicone, the greater the content of silicone, the faster the progression of the wear. When the silicone precipitates from the resin, the lubricating layer formed by the resin becomes thin, and the progression of wear is accelerated even more.

An object of the present invention is to provide an injection device which overcomes the above-described problems of a conventional injection device, and which can prevent wear from occurring, and which can improve the durabilities of a reverse flow preventing device, a heating cylinder, and a screw head.

### SUMMARY OF THE INVENTION

According to the present invention, this object is achieved by an injection device as defined by claim 1. The dependent claims define preferred or advantageous embodiments of the present invention.

To this end, the injection device of the present invention has a heating cylinder, and a screw disposed within the heating cylinder so as to rotate freely and advance and withdraw freely.

The screw has a screw main body; a screw head which is mounted to a front end of the screw main body, and which has a distal end portion and a small diameter portion; and a reverse flow preventing ring which is disposed at a periphery of the small diameter portion and which prevents a molding material from flowing reversely as the screw is advanced forward. Boron carbide is covered on a surface of at least one of the reverse flow preventing ring, the heating cylinder, and the screw head.

In another injection device of the present invention, the surface includes at least a sliding surface which slides against any of the reverse flow preventing ring, the heating cylinder and the screw head.

In yet another injection device of the present invention, a gap of about 30 µm to 110 µm is formed between an outer peripheral surface of the reverse flow preventing ring and an inner peripheral surface of the heating cylinder.

In still another injection device of the present invention, an intermediate layer is formed between the boron carbide and a base material.

In still yet another inj ection device of the present invention, a hardness of a sliding surface of the heating cylinder is lower than a hardness of a sliding surface of the reverse flow preventing ring.

In yet another injection device of the present invention, a hardness of a sliding surface of the screw head is lower than a hardness of a sliding surface of the reverse flow preventing ring.

### BRIEF DESCRIPTION OF THE DRAWINGS

Fig. 1 is a cross-sectional view showing main portions of an injection device in a first embodiment of the present invention.
Fig. 2 is a characteristic diagram of a reverse flow preventing device.
Fig. 3 is a cross-sectional view showing main portions of an injection device in a second embodiment of the present invention.

### DETAILED DESCRIPTION OF THE INVENTION

Hereinafter, embodiments of the present invention will be described in detail with reference to the drawings.

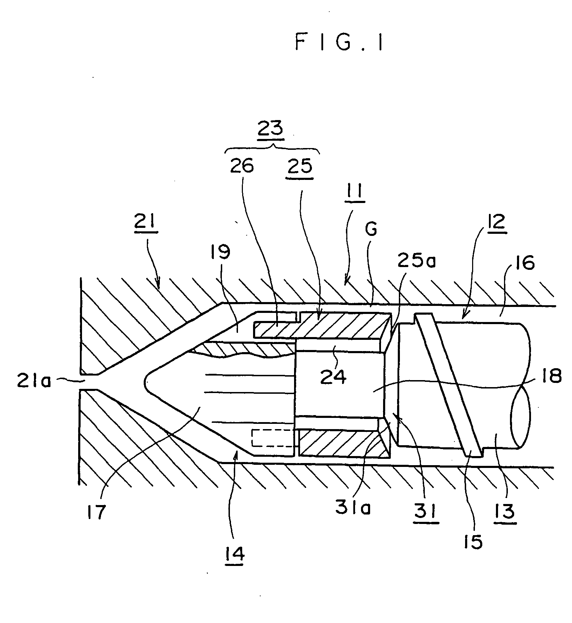

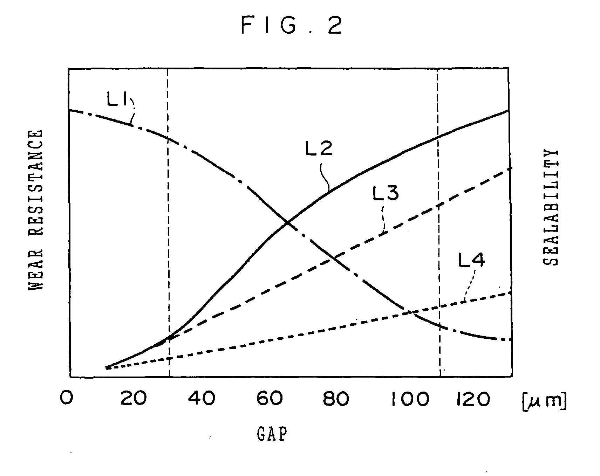

Fig. 1 is a cross-sectional view showing main portions of an injection device in a first embodiment of the present invention. Fig. 2 is a characteristic diagram of a reverse flow preventing device. In Fig. 2, the gap is on the horizontal axis, and the wear resistance and sealability are on the vertical axis.

In Fig. 1, reference numeral 11 is a heating cylinder serving as a cylinder member. The heating cylinder 11 has an injection nozzle 21 at the front end portion thereof (the left end portion in Fig. 1). A nozzle opening 21a is formed at the front end (the left end in Fig. 1) of the injection nozzle 21. Further, reference numeral 12 is a screw which serves as an injecting member and is disposed so as to be freely rotatable and so as to be able to freely advance and withdraw, within the heating cylinder 11. The screw 12 has a screw main body 13, and a screw head 14 which is mounted to the front end of the screw main body 13.

A spiral flight 15 is formed at the outer peripheral surface of the screw main body 13. A groove 16 is formed along the flight 15. Further, the screw head 14 has a distal end portion 17 which is formed in a substantially conical configuration, and a small diameter portion 18 which is circular and which is formed integrally with the rear (the right side in Fig. 1) of the distal end portion 17 and whose diameter is smaller than that of the distal end portion 17 . Grooves 19, which are for the passage of an unillustrated resin which serves as a molding material, are formed so as to extend along the axial direction at plural places (four places in the present embodiment) in the circumferential direction of the distal end portion 17.

A co-rotating type reverse flow preventing ring 23, which is cylindrical and is for preventing the resin from flowing reversely, is disposed at the periphery of the small diameter portion 18 so as to be able to move freely in the axial direction with respect to the screw head 14. An annular flow path 24 is formed between the small diameter portion 18 and the reverse flow preventing ring 23. A gap G is formed between the outer peripheral surface of the reverse flow preventing ring 23 and the surface of the heating cylinder 11, i.e., the inner peripheral surface of the heating cylinder 11. The gap G is the difference in the radial direction dimensions of these two members, i . e. , the difference between the radius of the reverse flow preventing ring 23 and the radius of the heating cylinder 11. Further, the reverse flow preventing ring 23 has a main body portion 25 positioned at the outer periphery of the small diameter portion 18, and claws 26 which are formed so as to project forward (toward the left in Fig. 1) from the main body portion 25 and which serve as anchor portions which anchor with the grooves 19. Accordingly, the reverse flow preventing ring 23 is rotated as the screw 12 is rotated.

Note that, in the present embodiment, four of the claws 26 are provided, and the claws 26 anchor with the grooves 19 respectively. However, it suffices to provide at least one claw 26.

In the injection device having the above-described structure, an unillustrated motor for metering, which serves as a first driving portion, is provided in order to rotate the screw 12, and an unillustrated motor for injection, which serves as a second driving portion, is provided in order to make the screw 12 advance and withdraw (i.e., in order to move the screw 12 toward the left and the right in Fig. 1).

In the metering process, when a metering processing means of an unillustrated control section carries out metering processing and the motor for metering is driven, the screw 12 is rotated, and resin is supplied from an unillustrated hopper which is disposed at a predetermined place at the heating cylinder 11. This resin is heated and melted by the heating cylinder 11, and is moved forward through the groove 16, and passes through the flow path 24 and the grooves 19, and is stored in front of the screw head 14 . Accompanying this, the screw 12 is withdrawn rearward (moved to the right in Fig. 1).

Next, in the injecting process, when an injection processing means of the control section carries out injection processing and the motor for injection is driven, the screw 12 is advanced forward (moved to the left in Fig. 1). The resin stored in front of the screw head 14 is injected out from the injection nozzle 21, and is filled into the cavity of an unillustrated mold device.

At the time of injecting the resin, a portion of the resin stored in front of the screw head 14 attempts to reversely flow rearward via the groove 16 of the screw 12, the space between the outer peripheral surface of the screw 12 and the inner peripheral surface of the heating cylinder 11, and the like. Here, the reverse flow preventing device is provided, and prevents the portion of the resin stored in front of the screw head 14 from reversely flowing rearward.

To this end, the reverse flow preventing device is formed from a sealing portion 31 formed at the front end portion of the screw main body 13, the screw head 14, the reverse flow preventing ring 23, and the like. The sealing portion 31 has a first sealing surface 31a which is formed at an incline so as to be tilted rearward from the central side toward the radial direction outer side. The reverse flow preventing ring 23 has, at the rear end thereof, a second sealing surface 25a formed so as to correspond to the first sealing surface 31a.

Accordingly, in the injecting process, when the screw 12 is advanced forward, the reverse flow preventing ring 23 is pushed rearward by the pressure of the resin in front of the screw head 14, and the first and second sealing surfaces 31a, 25a are brought into close contact with one another. Accordingly, the resin within the flow path 24 does not flow toward the screw main body 13 side. Therefore, it is possible to prevent the portion of the resin stored in front of the screw head 14 from attempting to reversely flow rearward.

As shown in the present embodiment, when the co-rotating type reverse flow preventing ring 23 is used, the reverse flow preventing ring 23 is rotated accompanying the rotation of the screw 12. Therefore, the reverse flow preventing ring 23, while rotating, contacts the heating cylinder 11, and the outer peripheral surface of the reverse flow preventing ring 23 and the inner peripheral surface of the heating cylinder 11 are sliding surfaces which slide against one another. When wear arises at the outer peripheral surface of the reverse flow preventing ring 23 and the inner peripheral surface of the heating cylinder 11, the durabilities of the reverse flow preventing device and the heating cylinder 11 deteriorate.

In particular, when molding is carried out by using a resin which contains silicone, the greater the silicone content, the faster the progression of wear. Further, when the silicone precipitates from the resin, the lubricating layer formed by the resin becomes thin, and the progression of wear becomes even faster.

Thus, it has been thought to slow the progression of wear by making the gap G large. However, when the gap G becomes large, when the screw 12 is advanced forward in the injecting process, the amount of resin which reversely flows rearward increases. As a result, the amount of resin filled in the cavity becomes unstable, and the quality of the molded product deteriorates.

Therefore, in the present embodiment, boron carbide (tetraboron carbide: B₄C), which serves as a covering film (a hard covering film) formed of a material having high wear resistance, is covered by vapor deposition on the surface of the reverse flow preventing ring 23. Note that, at the reverse flow preventing ring 23, in order to make the surface of the steel material which is the base material corrosion-resistant, it is preferable to form a chromium (Cr) layer as an intermediate layer, and to cover the boron carbide on the surface of the chromium layer. Moreover, although it is preferable that the boron carbide be covered only on the surface of the reverse flow preventing ring 23, the boron carbide may be covered on the inner peripheral surface of the heating cylinder 11. Or, the surface of the reverse flow preventing ring 23 and the inner peripheral surface of the heating cylinder 11 may be covered with boron carbide.

As shown in Table 1, boron carbide has a low coefficient of friction as compared with other highly wear-resistant materials such as titanium nitride (TiN), and has high hardness (Vickers hardness) as compared with titanium nitride (TiN), chromium nitride (CrN) and the like. Therefore, the progress of wear can be slowed. Moreover, because the temperature of the vapor deposition for forming the covering film is low, the adhesion with the steel material, the chromium layer, and the like is good. It is difficult for the boron carbide to be peeled off from the steel material, the chromium layer and the like, and in addition, it is difficult for the boron carbide to be affected by deformation. Note that when the chromium layer is used as an intermediate layer, it is even more difficult for the boron carbide to be peeled off because the chromium binds together well with the steel material and the boron carbide. A titanium (Ti) layer, a silicone layer, or the like can be used as an intermediate layer which can bind together well with the steel material and the boron carbide.

**TABLE 1**

| | coefficient of friction | Vickers hardness [Hv] | vapor deposition temperature [°C] |
|---|---|---|---|
| boron carbide (B₄C) | 0.2 - 0.3 | 2600 - 2800 | < 120 |
| titaniumnitride (TiN) | 0.3 - 0.5 | 2000 - 2300 | 480 - 510 |
| chromiumnitride (CrN) | 0.2 - 0.3 | 1500 - 1800 | 400 - 500 |

When the gap G is varied, the smaller the gap G, the greater the sealability, and the easier it is to prevent the portion of the resin stored in front of the screw head 14 from reversely flowing rearward. In contrast, the greater the gap G, the worse the sealability, and the harder it is to prevent the portion of the resin stored in front of the screw head 14 from reversely flowing rearward.

Moreover, the smaller the gap G, the greater the friction, and therefore, the lower the wear resistance, and the easier it is for wear to arise. In contrast, the larger the gap G, the less the friction, and therefore, the higher the wear resistance, and the more difficult it is for wear to arise.

Here, a comparison of the sealability, andthewear resistances of steel, boron carbide, and titanium nitride and chromium nitride at the time when the gap G is varied is shown in Fig. 2. In Fig. 2, L1 is a line showing sealablity, L2 is a line showing the wear resistanceofboroncarbide, L3isalineshowingthewearresistances of titanium nitride and chromium nitride, and L4 is a line showing the wear resistance of steel.

As shown in Fig. 2, it can be seen that, in the case of boron carbide, when the gap G is greater than or equal to 30 µm, the wear resistance is markedly higher than those of steel and titanium nitride and chromium nitride. Accordingly, it is preferable to cover the surface of the reverse flow preventing ring 23 and the inner peripheral surface of the heating cylinder 11 with boron carbide, and to make the gap G greater than or equal to 30 µm. Note that, when the gap G is larger than 110 µm, the sealability is low. Therefore, it is preferable that the gap G is less than or equal to 110 µm.

In this way, when the surface of the reverse flow preventing ring 23 and the inner peripheral surface of the heating cylinder 11 are covered by boron carbide and the gap G is greater than or equal to 30 µm and less than or equal to 110 µm, even if the reverse flow preventing ring 23, while rotating, contacts the heating cylinder 11, it is difficult for wear to arise at the outer peripheral surface of the reverse flow preventing ring 23 and the inner peripheral surface of the heating cylinder 11, and the durabilities of the reverse flow preventing device and the heating cylinder 11 can be improved.

Moreover, when molding is carried out by using a resin which contains silicone, even if the silicone content is large, and the silicone precipitates from the resin, and the lubricating layer formed by the resin becomes thin, and it becomes easy for the reverse flow preventing ring 23 and the heating cylinder 11 to contact one another, it is possible to prevent wear from arising because the coefficient of friction of the boron carbide is low.

Further, because there is no need to make the gap G large, when the screw 12 is advanced forward during the inj ecting process, the amount of resin which reversely flows rearward is not large, and the amount of resin which is filled into the cavity can be stabilized. Accordingly, the quality of the molded product can be improved.

Moreover, boron carbide is coveredon the surface of the reverse flow preventing ring 23, whereas the inner peripheral surface of the heating cylinder 11 is subjected to a nitriding treatment such that steel nitride is formed in a vicinity of the inner peripheral surface of the heating cylinder 11. Inthiscase, theVickershardness of the boron carbide is 2600 to 2800 Hv, whereas the Vickers hardness of the steel nitride is 1000 Hv or less. A sufficient difference in hardness is formed between the outer peripheral surface of the reverse flow preventing ring 23 and the inner peripheral surface of the heating cylinder 11.

Accordingly, the coefficient of friction between the reverse flow preventing ring 23 and the heating cylinder 11 can be made small. Therefore, not only is it possible to sufficiently prevent the occurrence of wear between the outer peripheral surface of the reverse flow preventing ring 23 and the inner peripheral surface of the heating cylinder 11, but also, it is possible to prevent scoring from occurring when the screw 12 is advanced forward.

Moreover, accompanying the increase in wear resistance due to the boron carbide, the peelability can be improved. Therefore, it is possible to prevent resin and the like from adhering to the surface. Accordingly, the occurrence of resin scorching can be prevented.

Next, a second embodiment of the present invention will be described. Structures which are the same as those of the first embodiment are denoted by the same reference numerals, and description thereof is omitted.

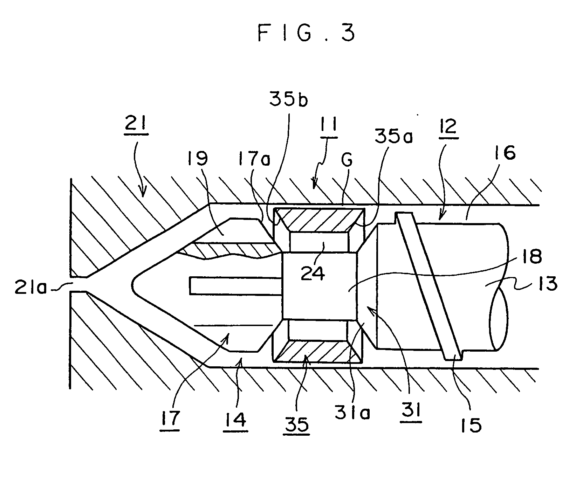

Fig. 3 is a cross-sectional view showing main portions of an injection device in the second embodiment of the present invention.

In this case, in the metering process, when the metering processing means of the unillustrated control section carries out metering processing and the unillustrated motor for metering is driven, the screw 12, which serves as an injecting member, is rotated, and resin, which is not illustrated and which serves as a molding material, is supplied from the unillustrated hopper which is disposed at a predetermined place at the heating cylinder 11. This resin is heated and melted by the heating cylinder 11, and is moved forward (toward the left in the figure) through the groove 16, and passes through the flow path 24 and the grooves 19, and is stored in front of the screw head 14. Accompanying this, the screw 12 is withdrawn rearward (moved to the left in the figure) .

Next, in the injecting process, when the injection processing means of the control section carries out injection processing and the unillustrated motor for injection is driven, the screw 12 is advanced forward (moved to the right in the figure). The resin stored in front of the screw head 14 is injected out from the injection nozzle 21, and is filled into the cavity of the unillustrated mold device.

The reverse flow preventing device is provided in order to prevent the portion of the resin stored in front of the screw head 14 from reversely flowing rearward (toward the right in the figure) . The reverse flow preventing device is formed from the sealing portion 31 formed at the front end portion (the left end portion in the figure) of the screw main body 13, the distal end portion 17, a reverse flow preventing ring 35, and the like. The sealing portion 31 has the first sealing surface 31a which is formed at an incline so as to be tilted rearward from the central side toward the radial direction outer side. The reverse flow preventing ring 35 has, at the rear end (the right end in the figure) thereof, a second sealing surface 35a formed so as to correspond to the first sealing surface 31a.

Accordingly, in the injecting process, when the screw 12 is advanced forward, the reverse flow preventing ring 35 is pushed rearward by the pressure of the resin in front of the distal end portion 17, and the first and second sealing surfaces 31a, 35a are brought into close contact with one another. As a result, the resin within the flow path 24 does not flow toward the screw main body 13 side. Therefore, it is possible to prevent the portion of the resin stored in front of the screw head 14 from attempting to reversely flow rearward.

As shown in the present embodiment, when the non-co-rotating type reverse flow preventing ring 35 is used, the reverse flow preventing ring 35 is completely independent of the screw head 14, and is not rotated accompanying the rotation of the screw 12. Thus, the occurrence of wear at the outer peripheral surface of the reverse flow preventing ring 35 and the inner peripheral surface of the heating cylinder 11 is suppressed.

In the metering process, when the screw 12 is withdrawn rearward as the screw 12 is rotated and the resin is stored in front of the screw head 14, the reverse flow preventing ring 35 is moved forward relative to the screw 12, and is pushed against the screw head 14. In this case, the screw 12 rotates, whereas the reverse flow preventing ring 35 is not rotated. Therefore, the screw head 14 and the reverse flow preventing ring 35 slide against one another, and wear arises at the rear end surface of the screw head 14 (the right end surface in the figure) and the front end surface of the reverse flow preventing ring 35 (the left end surface in the figure). Note that the screw head 14 has, at the rear end thereof, a first sliding surface 17a which is formed at an incline so as to be tilted forward from the central side toward the radial direction outer side. The reverse flow preventing ring 35 has, at the front end (the left end in the figure) thereof, a second sliding surface 35b formed so as to correspond to the first sliding surface 17a.

Here, boron carbide, which serves as a covering film (a hard covering film) formed of a material having high wear resistance, is covered by vapor deposition on the surfaces of the reverse flow preventing ring 35 and the screw head 14. Note that, at the reverse flow preventing ring 35 and the screw head 14, in order to make the surface of the steel material which is the base material corrosion-resistant, it is preferable to form a chromium layer as an intermediate layer, and to cover the boron carbide on the surface of the chromium layer.

Accordingly, even if the screw head 14 and the reverse flow preventing ring 35 slide against one another while the screw 12 is rotating, it is difficult for wear to arise at the second sliding surface 35b of the reverse flow preventing ring 35 and the first sliding surface 17a of the screw head 14, and the durabilities of the reverse flow preventing device and the screw head 14 are improved.

Note that it is preferable to cover the boron carbide only on the surface of the reverse flow preventing ring 35. However, the boron carbide may be covered on the surface of the screw head 14. Moreover, the boron carbide may be covered on the surfaces of the reverse flow preventing ring 35 and the screw head 14.

Moreover, boron carbide is covered on the second sliding surface 35b, whereas the first sliding surface 17a is subjected to a nitriding treatment such that steel nitride is formed in a vicinity of the first sliding surface 17a. In this case, the Vickers hardness of the boron carbide is 2600 to 2800 Hv, whereas the Vickers hardness of the steel nitride is 1000 Hv or less . A sufficient difference in hardness is formed between the first and second sliding surfaces 17a, 35b.

Accordingly, the coefficient of friction between the screw head 14 and the reverse flow preventing ring 35 can be made small. Therefore, the occurrence of wear at the first and second sliding surfaces 17a, 35b can be sufficiently prevented.

Moreover, when molding is carried out by using a resin which contains silicone, even if the silicone content is large, and the silicone precipitates from the resin, and the lubricating layer formed by the resin becomes thin, and it becomes easy for the screw head 14 and the reverse flow preventing ring 35 to contact one another, it is possible to prevent wear from arising.

### EXAMPLE

Molding was carried out by using resin "H45H" (manufactured by Toyo-Styrene Co., Ltd.) in an inj ection molding machine "SG180M" (screw diameter: 40 mm) manufactured by Sumitomo Heavy Industries, Ltd. The resin "H45H" contained 2% by mass of silicone "KF96H" manufactured by Shin-Etsu Chemical Co. , Ltd. and 0.5% by mass of carbon "#950" manufactured by Mitsubishi Chemical Corp.

Then, a multilayer structure of one chromium layer and two boron layers including boron carbide "DB-1031J" manufactured by Diamond Black Inc. was covered on the screw head and the reverse flow preventing device used in the injection device of the "SG180M" injection molding machine.

Note that the present invention is not limited to the above-described Example, and various modifications can be carried out on the basis of the gist of the present invention, and such modifications are not to be excluded from the scope of the present invention.

As described above, the injection device of the present invention has a heating cylinder, and a screw disposed within the heating cylinder so as to rotate freely and advance and withdraw freely.

The screw has a screw main body; a screw head which is mounted to a front end of the screw main body, and which has a distal end portion and a small diameter portion; and a reverse flow preventing ring which is disposed at a periphery of the small diameter portion and which prevents a molding material from flowing reversely as the screw is advanced forward. Boron carbide is covered on a surface of at least one of the reverse flow preventing ring, the heating cylinder, and the screw head. In this way, when the surface is covered by boron carbide, it is difficult for wear to arise at the outer peripheral surface of the reverse flow preventing ring and the inner peripheral surface of the heating cylinder, and the durabilities of the reverse flow preventing device and the heating cylinder can be improved.

Moreover, when molding is carried out by using a resin which contains silicone, even if the silicone content is large, and the silicone precipitates from the resin, and the lubricating layer formed by the resin becomes thin, wear can be prevented from arising.

In yet another injection device of the present invention, a gap of about 30 µm to 110 µm is formed between an outer peripheral surface of the reverse flow preventing ring and an inner peripheral surface of the heating cylinder. Because of the gap of about 30 µm to 110 µm, when the screw is advanced forward during the injecting process, the amount of resin which reversely flows rearward is not large, and the amount of resin which is filled into the cavity can be stabilized. Accordingly, the quality of the molded product can be improved.

In still yet another inj ection device of the present invention, a hardness of a sliding surface of the heating cylinder is lower than a hardness of a sliding surface of the reverse flow preventing ring. Accordingly, the coefficient of friction between the reverse flow preventing ring and the heating cylinder can be made small. Therefore, it is possible to sufficiently prevent the occurrence of wear between the sliding surfaces.

In yet another injection device of the present invention, a hardness of a sliding surface of the screw head is lower than a hardness of a sliding surface of the reverse flow preventing ring. Accordingly, the coefficient of friction between the reverse flow preventing ring and the screw head can be made small. Therefore, it is possible to sufficiently prevent the occurrence of wear between the sliding surfaces.

## Claims

1. An injection device having a heating cylinder (11) , and a screw (12) disposed within the heating cylinder (11) so as to rotate freely and advance and withdraw freely,
wherein the screw (12) comprises a screw main body (13), a screw head (14) mounted to a front end of the screw main body (13), and a reverse flow preventing ring (23;35) for preventing a molding material from flowing reversely as the screw advances forward, and the screw head (14) has a distal end portion (17) and a small diameter portion (18), and the reverse flow preventing ring (23;35) is disposed at a periphery of the small diameter portion (18), and boron carbide is covered on a surface of at least one of the reverse flow preventing ring (23;35), the heating cylinder (11), and the screw head (14).

2. The injection device of claim 1, wherein the surface includes at least one sliding surface (17a, 35b) which slides against any of the reverse flow preventing ring (23; 35) , the heating cylinder (11) and the screw head (14).

3. The injection device of claim 2, wherein a hardness of a sliding surface of the heating cylinder (11) is lower than a hardness of a sliding surface (35b) of the reverse flow preventing ring (23; 35).

4. The injection device of claim 2 or 3, wherein a hardness of a sliding surface (17a) of the screw head (14) is lower than a hardness of a sliding surface (35b) of the reverse flow preventing ring (23; 35).

5. The injection device of any one of the preceding claims, wherein a gap (9) of a value in a range of about 30 µm to 110 µm is formed between an outer peripheral surface of the reverse flow preventing ring (23; 35) and an inner peripheral surface of the heating cylinder (11) .

6. The injection device of any one of the preceding claims, wherein an intermediate layer is formed between the boron carbide and the reverseflowpreventingring (23; 35) whichservesasabasematerial.

7. The injection device of claim 6, wherein the intermediate layer is a layer containing chromium, and the boron carbide is covered on a surface of a chromium layer.

8. The injection device of claim 6, wherein the intermediate layer is a layer containing one of titanium and silicone, and the boron carbide is covered on a surface of the layer containing one of titanium and silicone.

9. The injection device of any one of the preceding claims, wherein grooves (16, 19) for passage of the resin are formed at plural places in a peripheral direction of the distal end portion (17) of the screw head, and the reverse flow preventing ring (23) is a co-rotating type, and includes a main body portion (25) positioned at an outer periphery of the small diameter portion (18), and at least one anchor portion projecting from the main body portion (25) and anchoring with the grooves.

10. The injection device of any one of claims 1 to 8, wherein the reverse flow preventing ring (35) is a non-co-rotating type which does not rotate accompanying rotation of the screw (12).
